# EUROPEAN PATENT APPLICATION

(11) **EP 0 818 702 A1**
(43) Date of publication of application: **14.01.1998**
(21) Application number: 97305088.3
(22) Date of filing: 10.07.1997
(51) Int. Cl.: G02F 1/09, G09F 9/37

(54) **Magnetic fluid display panels**

(30) Priority: 10.07.1996 KR 9627772; 24.04.1997 KR 9715344
(71) Applicant: Seo, Jong-wook, Mapo-gu, Seoul (KR); Won, Jong-seng, Seocho-gu, Seoul (KR)
(72) Inventor: Seo, Jong-wook, Mapo-Gu, Seoul (KR)
(74) Representative: Stanley, David William

(57) **Abstract**

A magnetic fluid display panel includes a front plate 10 and a rear plate 20, separated from each other by a predetermined distance, a plurality of linear first electrodes 21 arranged in strips on an inner surface of the rear plate 20 in a first direction, a plurality of second electrodes 22 arranged in strips in a direction perpendicular to the first electrodes 21 and electrically insulated from the first electrodes 21, pixel electrodes 24 of a predetermined pattern formed between intersecting points of the first electrodes 21 and the second electrodes 22, having light transmission areas 31 through which light can pass, and electrically connected to adjacent first and second electrodes 21, 22 for forming a magnetic field around the pixel electrodes 24, and magnetic fluid 30 on the inner surface of the rear plate 20 in the vicinity of the pixel electrodes 24. Such display panels may be easily manufactured, thus saving manufacturing costs. In particular, a moving colour picture can be easily achieved by such display panels.

## Description

The present invention relates to magnetic fluid display panels.

After the invention of the cathode ray tube (CRT) as a display device using an accelerated electron beam, there were subsequently developed plasma display panels (PDP) using plasma discharge, and liquid crystal displays (LCD) using liquid crystal having electro-optic effects. Also, there are vacuum fluorescent displays (VFD) using an electron beam which is accelerated at a low speed, electro-luminescent displays (ELD) using electroluminous elements, and magnetic fluid display panels using magnetic fluid. Such display devices are categorized into active display type, which emits light, and non-active display type, which does not emit light and requires an additional light source.

The LCD used for notebook computers is representative of the non-active display type. The LCD is applied to small electronic goods as well as notebook computers since it is light, thin and small and consumes little power. However, the LCD has a shortcoming in that the manufacturing process is complicated due to the difficulties related with liquid crystal handling. For example, the liquid crystal is injected by a complicated vacuum injection method since air should not reside in the liquid crystal layer between a front plate and a rear plate which are separated from each other by a predetermined distance. The inner space of the LCD must be shielded by partition walls of a predetermined width for the liquid crystal to be injected by a method such as a vacuum injection method. Therefore, a dummy space occupies a considerable portion of the effective screen area due to the partition walls when a display device for a large screen is manufactured by combining multiple LCD panels, and thus the continuity of picture between the LCD panels deteriorates. Additionally, heat-resistant material should be used for the fabrication of an LCD since the LCD undergoes high temperature processes and it is difficult to manufacture a large-screen LCD since it undergoes complicated processes.

The magnetic fluid display panel is also a non-active display device. As is well known, the magnetic fluid is a magnetic colloid in which hyperfine ferromagnetic particles are stably diffused. The ferromagnetic particles in the magnetic fluid do not separate from the fluid under an ordinary centrifugal force or an ordinary magnetic field, and the fluid acts as if it is a paramagnetic material in the magnetic field. A metal oxide magnetic fluid and a metal magnetic fluid are examples of magnetic fluid. An example in which a magnetic fluid is applied for display applications is provided in European Patent 0633488 A1, in which a principle similar to a conventional LCD is applied.

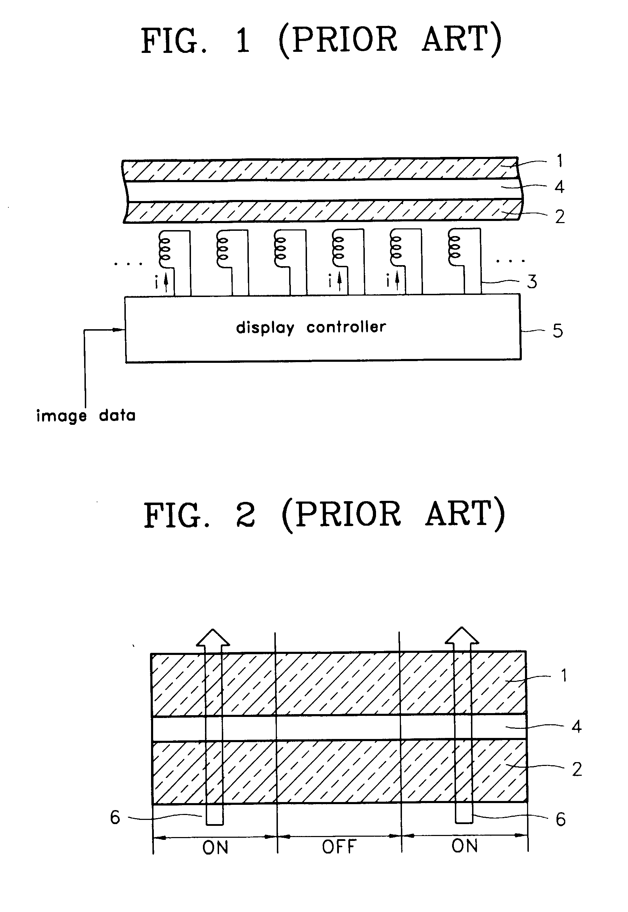

Figures 1 and 2 of the accompanying diagrammatic drawings are schematic sectional views of a conventional magnetic fluid display panel. Referring to Figures 1 and 2, a magnetic fluid 4 is interposed between a front plate 1 and a rear plate 2. A plurality of magnetic field coils 3 of a pixel unit for applying a magnetic field to the magnetic fluid 4 in which magnetic particles with geometric anisotropy are diffused are installed at the rear portion of the rear plate 2. The magnetic field coils 3 are connected to a display controller 5 to drive the sample. According to the description of this prior art, the magnetic field coils 3 have a structure in which loop-like patterns formed of multiple layers on a multi-stack substrate are connected by a through hole. In such a display panel, light is transmitted by applying a magnetic field to a portion (ON) in which the transmission of light 6 is required and aligning the magnetic particles in the portion, and light is absorbed and blocked in a portion (OFF) in which the magnetic particles are not aligned but are randomly scattered as shown in Figure 2.

It is very difficult to give geometric anisotropy to the magnetic particles of the magnetic fluid in a hyperfine state and light control by the aligned/non-aligned magnetic particles is not easily performed. In addition, the processes for manufacturing the magnetic field coils 3 are very complicated since the magnetic field coils 3 for providing the magnetic field to the magnetic fluid are formed by a multi-stack structure.

In U.S. Patent 3,863,249, which discloses another magnetic fluid display panel, light is blocked or transmitted in the light transmission area by positioning the magnetic fluid in the light transmission area or moving the magnetic fluid to another location by a magnetic force without alignment/non-alignment of magnetic particles. However, the magnetic fluid display panel requires high electrical power since a strong magnetic field is required for the movement of the magnetic fluid and is not suitable for moving pictures since pixel switching response time of the magnetic fluid is very slow. Additionally, the manufacturing cost of such a magnetic fluid display panel is high and the magnetic fluid display panel is not suitable for mass production and miniaturization since it has a structure in which magnetic coils formed separately should be attached as magnetic field forming means.

Preferred embodiments of the present invention aim to provide a display panel having a rapid response, and thus capable of displaying motion pictures.

It is another aim to provide a magnetic fluid display panel whose manufacturing cost is low and whose structure is simple, thus facilitating manufacture thereof and suitability for mass production.

It is still another aim to provide a magnetic fluid display panel which is advantageous for the construction of an extra-large display device.

According to one aspect of the present invention, there is provided a magnetic fluid display panel, comprising:
a front plate and a rear plate, separated from each other by a predetermined distance;
a plurality of first electrodes arranged in strips on an inner surface of said rear plate in a first direction;
a plurality of second electrodes arranged in strips in a direction which crosses said first direction and electrically insulated from said first electrodes;
pixel electrodes of a predetermined pattern formed between crossing points of said first and second electrodes, having light transmission areas through which light can pass, each pixel electrode being electrically connected to adjacent first and second electrodes for forming a magnetic field around the pixel electrode; and
magnetic fluid on the inner surface of said rear plate in the vicinity of said pixel electrodes.

Preferably, said first and second electrodes extend rectilinearly at right angles to one another, to form a rectangular matrix.

Preferably, colour filters are formed between said pixel electrodes and said rear plate.

Preferably, ferromagnetic shield layers are formed between said pixel electrodes and said rear plate.

Preferably, said predetermined pattern of said pixel electrodes is a serpentine pattern such that each of said pixel electrodes zigzags back and forth.

Preferably, colour reflective films are formed between said pixel electrodes and said rear plate.

Preferably, colour filters corresponding to said pixel electrodes are formed in said front plate.

Preferably, said colour filters comprise unit colour filters of a plurality of colours and a spacer formed by overlapping said unit colour filters is formed in a predetermined portion of the boundary area of said unit colour filters.

Preferably, a plurality of signal lines for transmitting signals to said first and second electrodes are arranged on an outer surface of said rear plate and through holes, in which contacts for electrically connecting said first and second electrodes with said signal lines are formed, are formed in said rear plate.

Preferably, a spacer layer for maintaining said predetermined distance is interposed between said front plate and said rear plate.

Preferably, said spacer layer comprises a first spacer formed on the inner surface of said rear plate and a second spacer formed on an inner surface of said front plate.

Preferably, said first spacer is manufactured during a process step in which said pixel electrode is manufactured.

Preferably, said magnetic fluid is located only on the inner surface of said rear plate.

Preferably, each of said pixel electrodes is provided with walls to assist retention of said magnetic fluid.

Where the pixel electrodes are of serpentine pattern, for each of said pixel electrodes, preferably said walls having a predetermined width and height are formed in areas defined between consecutive portions of the pixel electrode.

Preferably, light blocking layers corresponding to said walls are formed on an inner surface of said front plate.

Preferably, a light blocking layer is formed in areas other than light transmission areas of said pixel electrodes.

Wherein a magnetic fluid display panel as above comprises colour filters, preferably said colour filters comprise unit colour filters of a plurality of colours and said light blocking layer is formed by overlapping said unit colour filters.

Preferably, a plurality of third electrodes are formed on said rear plate parallel to said first or said second electrodes; and each said pixel electrode comprises a first sub-pixel electrode electrically connected to said first and second electrodes and a second sub-pixel electrode electrically connected to said second electrode and said third electrode.

Preferably, for each said pixel electrode, said first and second sub-pixel electrodes follow substantially the same path alongside one another.

Said walls may be formed along boundaries of said first sub-pixel electrode and second sub-pixel electrode of each pixel electrode.

Said walls may be formed in areas defined by said first sub-pixel electrodes and in areas defined by said second sub-pixel electrodes.

Preferably, each said wall comprises a group of dielectric columns having predetermined width, height, and gap distance.

According to another aspect of the present invention, there is provided a method of manufacturing a magnetic fluid display panel according to any of the preceding aspects of the invention, comprising the steps of:
forming said plurality of first electrodes in strips on the inner surface of the rear plate in a first direction;
forming a first insulating film on said first electrodes;
forming said plurality of second electrodes on said first insulating film;
forming a second insulating film on said second electrodes;
forming said pixel electrodes on said second insulating film, each having a light transmission area in the range of a magnetic field generated when the pixel electrode is energised via said first and second electrodes;
coating said magnetic fluid to a predetermined thickness on said pixel electrodes and the surface of said second insulating layer exposed to said light transmission area;
freezing said magnetic fluid;
exposing the surface of said pixel electrode by polishing said magnetic fluid to a predetermined thickness; and
fixing said front plate to said rear plate, to maintain said predetermined distance therebetween.

A method as above may comprise the further steps of:
forming a plurality of signal lines for transmitting a display signal on an outer surface of the rear plate; and
forming through holes in the rear plate for contacts to electrically connect said first and second electrodes with said signal lines.

For a better understanding of the invention, and to show how embodiments of the same may be carried into effect, reference will now be made, by way of example, to Figures 3 to 42 of the accompanying diagrammatic drawings, in which:
Figure 3 is a sectional view of a first embodiment of a magnetic fluid display panel according to one example of the present invention;
Figure 4A is an enlarged view of portion A in Figure 3;
Figure 4B is an enlarged view of portion B in Figure 3;
Figure 5 is an enlarged plan view of a pixel electrode of the first embodiment of the present invention shown in Figure 3;
Figure 6 shows an electrode arrangement of the embodiment of Figure 3;
Figures 7A and 7B show movement of magnetic fluid by driving a pixel electrode of the display panel of Figure 3;
Figure 8 is the schematic sectional view of a second embodiment of an example of the present invention in which a colour filter layer is prepared under a pixel electrode;
Figure 9 is an enlarged partial view of Figure 8;
Figure 10 shows an arrangement of pixel electrodes of the second embodiment of the present invention shown in Figure 8;
Figure 11 is a plan view showing an arrangement of pixel electrode with respect to the rear plate of a third embodiment of an example of the present invention in which a colour reflective layer is prepared under a pixel electrode;
Figure 12 is a sectional view taken along the line A-A' of Figure 11;
Figure 13 is a sectional view taken along the line B-B' of Figure 11;
Figure 14 is a plan view showing the relative positional relationship between a first electrode and a second electrode of the third embodiment of the present invention;
Figure 15 is a schematic sectional view of a fourth embodiment of an example of the present invention in which a colour filter is prepared on a front plate side;
Figure 16 is a sectional view of a front plate in a fifth embodiment of an example of the present invention in which a spacer is formed by a colour filter;
Figures 17A through 17C show processes for forming the colour filter layer and the spacer layer of Figure 16;
Figure 18 is a plan view of a pixel electrode of a sixth embodiment of the present invention in which the pixel electrode includes two sub-pixel electrodes;
Figures 19A and 19B are sectional views of the sixth embodiment of Figure 18 showing an operational state of a pixel;
Figure 20 is a plan view of a pixel electrode of a seventh embodiment of an example of the present invention in which a wall is formed along a boundary of sub-pixel electrodes;
Figure 21 is a partial perspective view showing structures of a wall and sub-pixel electrode of the seventh embodiment of the present invention;
Figures 22A and 22B are schematic sectional views of the seventh embodiment of Figure 20 showing an operation state of a pixel;
Figure 23 is a plan view of a pixel electrode of an eighth embodiment of the present invention in which a wall is formed in the middle of an area in which a sub-pixel electrodes are integrated;
Figure 24 is a partial perspective view showing structures of a wall and sub-pixel electrode of the eighth embodiment of the present invention;
Figures 25A and 25B are schematic sectional views of the eighth embodiment of Figure 23 showing operational states of a pixel;
Figure 26 is a plan view of a pixel electrode of a ninth embodiment of an example of the present invention in which the pixel electrode forms integrated areas by a predetermined distance;
Figures 27A and 27B are schematic sectional views of the ninth embodiment of Figure 26 showing operational states of a pixel;
Figure 28 is a sectional view of a front plate in a tenth embodiment of an example of the present invention in which spacers and light blocking layers are formed by colour filters;
Figures 29A through 29D illustrate processes for forming a colour filter layer, spacer, and light blocking layer of Figure 28;
Figure 30 is the front view of a large display device in which a plurality of display panels according to examples of the present invention are integrated; and
Figures 31 through 42 illustrate a manufacturing processes of one embodiment of display panel according to one example of the present invention.

In the figures, like reference numerals denote like or corresponding parts.

The various embodiments of display panel according to examples of the present invention will now be described with reference to the attached drawings.

### EMBODIMENT 1

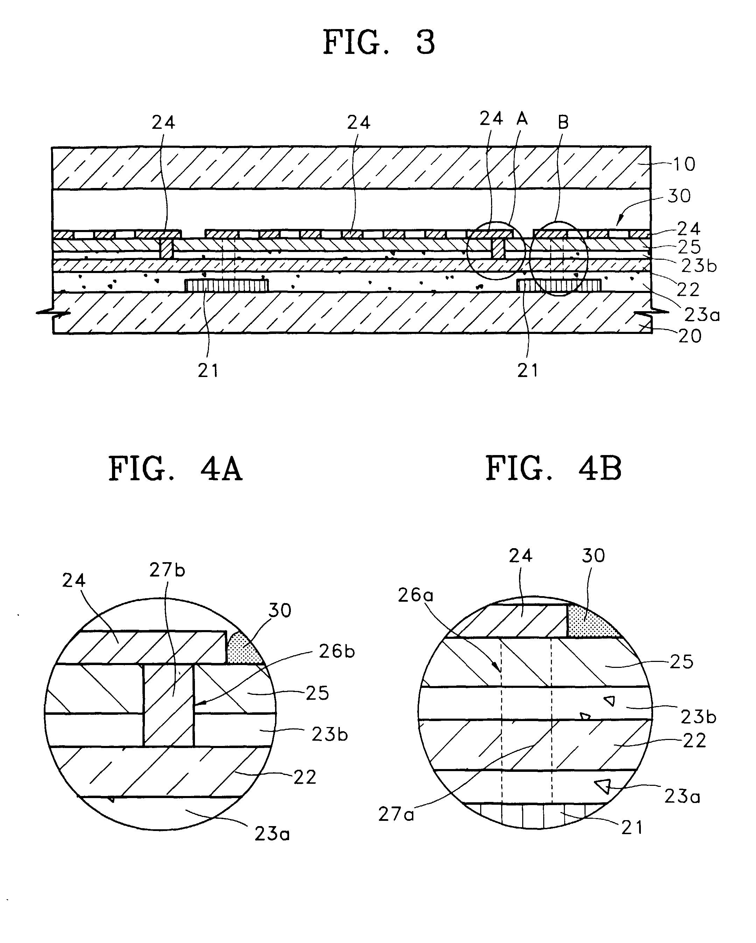

Referring to Figure 3, a front panel or plate 10 and a rear plate 20 of the display panel are formed of a transparent material and disposed apart from each other by a predetermined distance. A plurality of first electrodes 21 are arranged in parallel on the inner surface of the rear plate 20 in a first direction, separated from each other by a predetermined distance. A plurality of second electrodes 22 are arranged in parallel on the first electrodes 21 in a direction perpendicular to the first direction, with a first insulating layer 23a interposed therebetween. A second insulating layer 23b and a ferromagnetic shield layer 25 are disposed subsequently on the second electrode 22. Here, the second insulating layer 23b may be omitted in the case that the ferromagnetic shield layer 25 is insulating but is essential for electrical insulation in the case that the ferromagnetic shield layer 25 is not applied thereto. Pixel electrodes 24 are electrically connected to the first electrode 21 and the second electrode 22 and positioned on the ferromagnetic shield layer 25. Opposite ends of each pixel electrode 24 are electrically connected to first and second electrodes 21 and 22. As shown in Figure 4a, one end of each pixel electrode 24 is electrically connected to a respective second electrode 22 by means of a contact 27b which passes through a through hole 26b in the ferromagnetic shield layer 25. As shown in Figure 4b, the other end of the pixel electrode 24 is electrically connected to a respective first electrode 21 by means of a contact 27a which passes through a through hole 26a in the ferromagnetic shield layer 25.

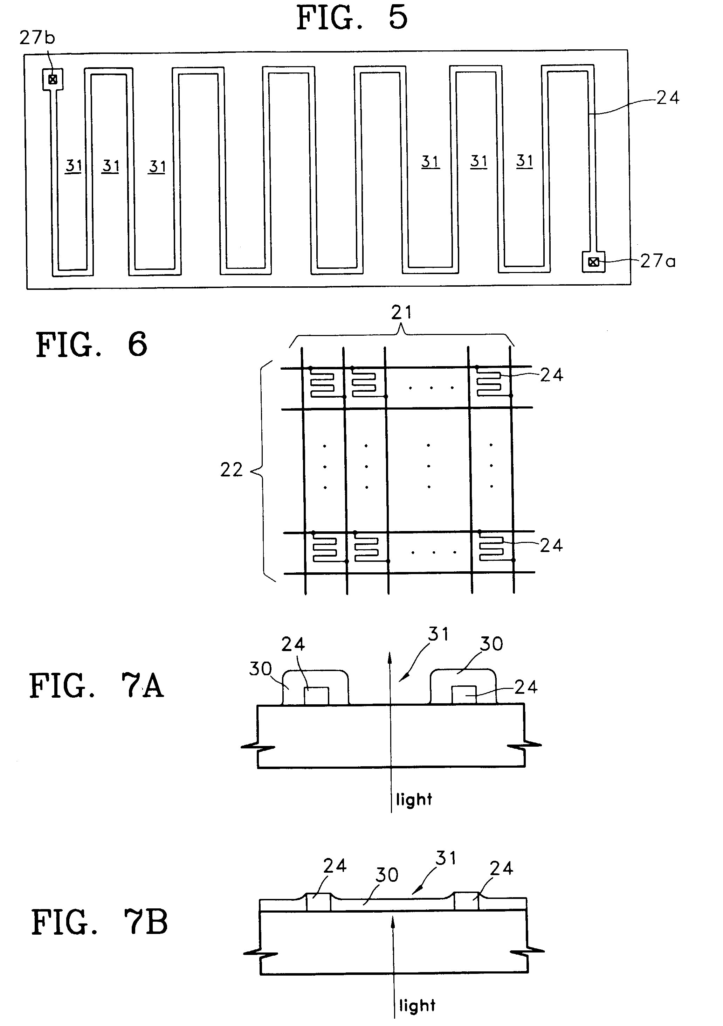

The pixel electrode 24 is formed in a serpentine manner to zigzag back and forth on the second insulating layer 23b as shown in Figure 5 and the ends thereof contact the first and second contacts 27a and 27b.

The display panel of Figure 3 having the above-mentioned structure has an orthogonal X-Y matrix type electrode arrangement as shown in Figure 6. Each pixel electrode 24 generates a magnetic field around the electrode by the electrical current applied by a respective first electrode 21 and second electrode 22, and light passing through a respective light transmission area 31 (Figure 7A) is modulated by the magnetic field, which pulls the magnetic fluid 30 into the vicinity of the electrode surface in order to block light in the light transmission area 31. That is, when current is applied to the pixel electrode 24, the magnetic fluid polarizes due to the magnetic field formed around the electrode. At this time, since the magnetic field is stronger near the pixel electrode 24, a force is applied to the magnetic fluid in the direction of the body of the pixel electrode 24 and, therefore, the magnetic fluid 30 is displaced towards the pixel electrode 24, as shown in Figure 7A. Figure 7B shows a state in which light transmission is prevented since current is not applied to the pixel electrode 24, and therefore, the magnetic fluid 30 remains in the light transmission area 31 due to the surface tension of the magnetic fluid 30 and surface force of the light transmission area 31.

The magnetic fluid 30 stays apart from the front plate 10 and resides only on the rear plate 20 side as shown in Figures 7A and 7B. The magnetic fluid 30 controls the light transmission through the light transmission area 31 by moving between the exposed surface of the light transmission area 31 of the pixel electrode 24 and the surface of the pixel electrode 24 according to the activation or non-activation of the pixel electrode 24 as mentioned above. The distance between the front plate 10 and the rear plate 20 is controlled by a spacer means (not shown) which is arranged therebetween so that the magnetic fluid 30 does not contact the front plate 10 when the magnetic fluid 30 is moved up to the surface of the pixel electrode 24 as mentioned above. According to experiments, it is preferable to make the distance between the front plate 10 and the rear plate 20, the height (the thickness) of the pixel electrode 24, the linewidth of the pixel electrode 24, the width of the light transmission area 31, and the thicknesses of the first electrode 21 and the second electrode 22 to be, for example, 30Ám, 3Ám, 3Ám, 10Ám, and 1Ám, respectively. In addition, it is preferable to provide the ferromagnetic shield layer in order to minimize distortion due to interference between signals.

### EMBODIMENT 2

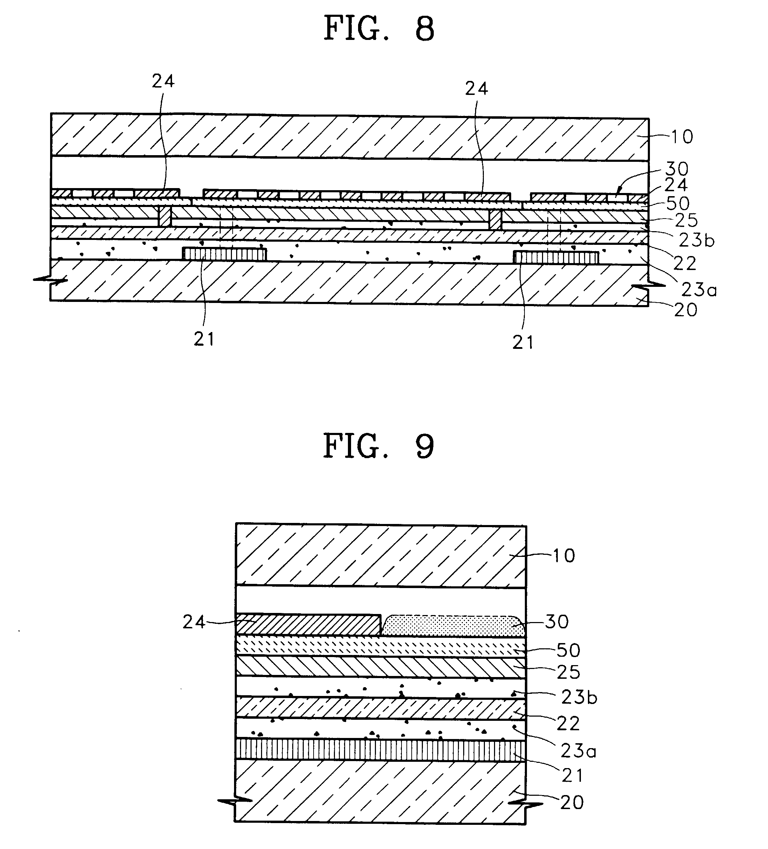

In the second embodiment shown in Figure 8, a colour filter layer 50 is arranged under the pixel electrodes 24. Other than the addition of the filter layer 50, the structure of the second embodiment is identical to that of the first embodiment shown in Figure 3. Figure 9 is an enlarged partial view of Figure 8.

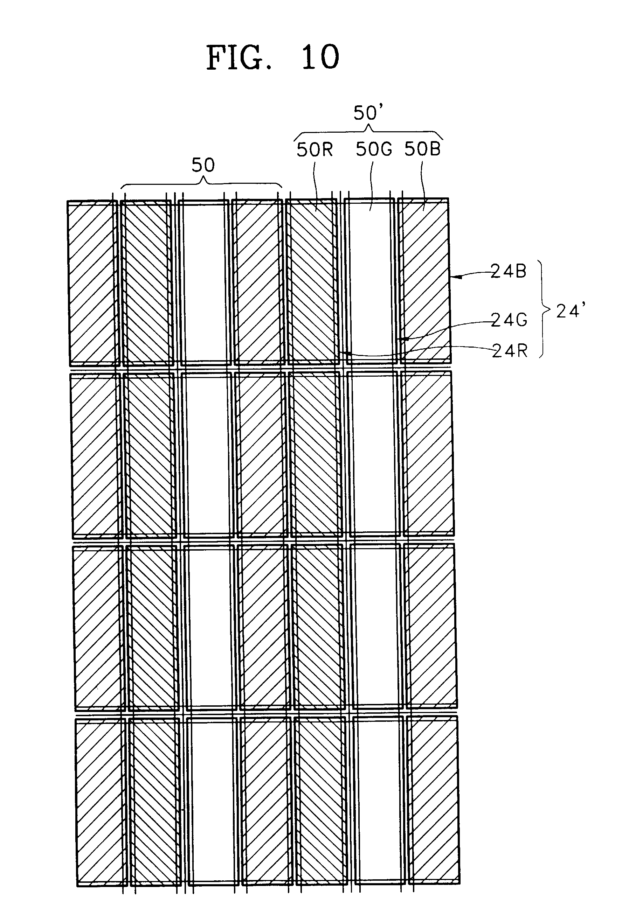

Figure 10 shows the arrangement of the pixel electrodes to realize colour pictures, in which one set of pixel electrodes 24' is comprised of three unit pixel electrodes 24R, 24G, and 24B, and a set of colour filters 50' is comprised of colour filters 50R, 50G, and 50B corresponding to the unit pixel electrodes 24R, 24G, and 24B. The concept of driving the unit pixel electrodes of the respective pixel sets is identical to that in a conventional colour liquid crystal display, and therefore does not require a detailed explanation here.

A reflective type display panel, which is a preferred form, can be obtained when light reflectivity is provided by the ferromagnetic shield layer or the colour filter. For example, when the colour filter in the above-mentioned embodiment is replaced by a coloured reflector, light of a specific wavelength is reflected among light incident on the colour reflector, thus generating a colour picture in a reflective type. By doing so, it is possible to mount circuit components for display on the back surface of the rear plate. In particular, a large screen can be constructed by combining a plurality of display panels because an electrical signal to the first electrode and the second electrode can be applied via through holes prepared in the rear plate.

### EMBODIMENT 3

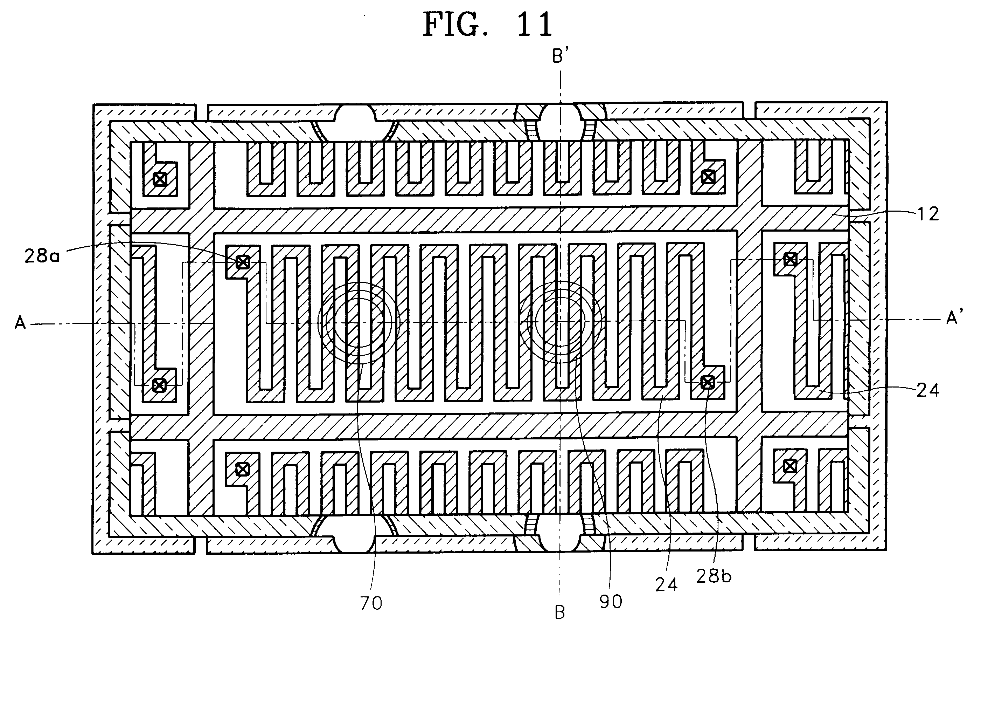

Referring to Figure 11, a plurality of pixel electrodes 24 are arranged in an array. First and second contacts 28a and 28b for electrical contact between each pixel electrode 24 and a respective first electrode 21 and the second electrode 22, which are positioned in the lower portion of the pixel electrode 24, are positioned at each end of the pixel electrode 24. Also, first and second contact columns 90 and 70, which provide electrical contact between the first and the second electrodes 21 and 22 and signal lines 61 and 71 (described later) are located underneath the pixel electrode 24, passing through respective through holes.

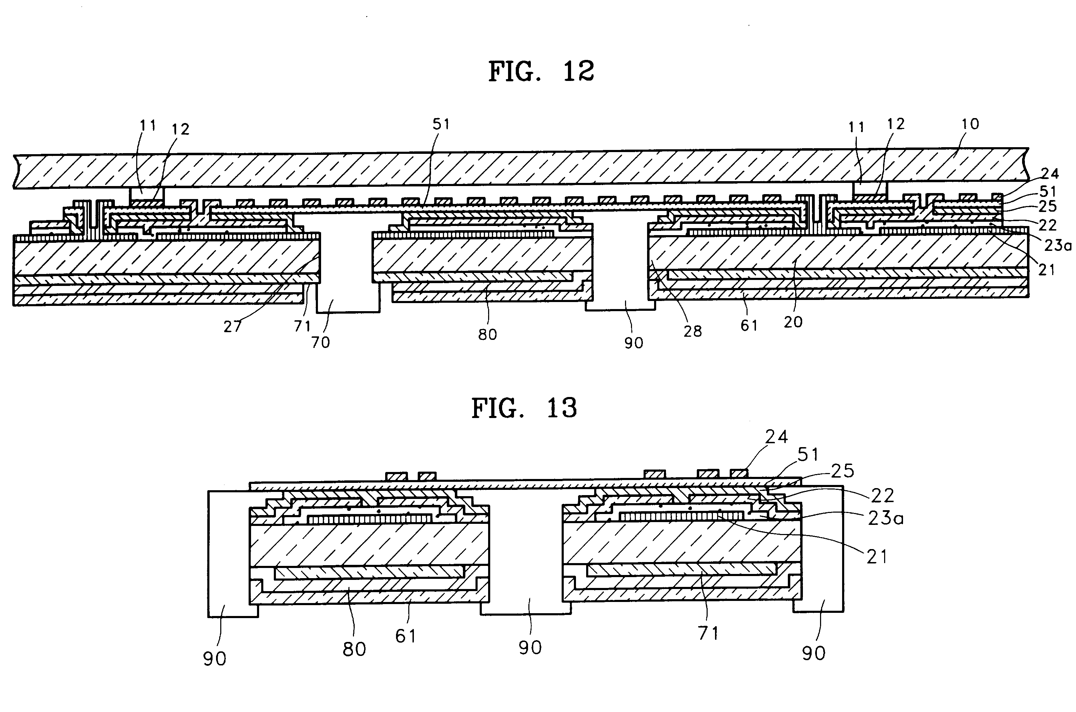

Referring to Figures 12 and 13, the front plate 10 formed of a transparent material and the rear plate 20 of a transparent or opaque material are separated from each other by a predetermined distance. The distance between the front plate 10 and the rear plate 20 is maintained by spacer layers 11 and 12, which are formed between the front and rear plates 10 and 20 and connected to each other. Here, the first spacer layer 12 of the rear plate 20 is formed during the formation of the pixel electrode 24 and the upper and lower spacer layers 11 and 12 are affixed to each other, for example, by adhesives, pressure welding or cold pressure welding. A plurality of first electrodes 21 are arranged in parallel in a first direction, separated from each other by predetermined distance, on the inner surface of the rear plate 20. A plurality of second electrodes 22 are arranged in parallel on and perpendicular to the first electrodes 21 with an insulating layer 23a interposed therebetween. A ferromagnetic shield layer 25 formed of an insulating material is positioned on the second electrodes 22. A colour reflective film 51 is formed on the ferromagnetic shield layer 25, on which the pixel electrode 24 electrically connected to the first electrode 21 and the second electrode 22 is formed. The ends of the pixel electrode 24 are electrically connected to the first electrode 21 and the second electrode 22 by the contacts fillings 28a and 28b filling the respective through holes. The first electrode 21 and the second electrode 22 are electrically connected to the first and second signal lines 71 and 61 formed on the backside of the rear plate 20 through the contact layers 70 and 90 filling the through holes 27 and 28 of the rear plate 20. An electrically insulating layer 80 is interposed between the first signal line 71 and the second signal line 61.

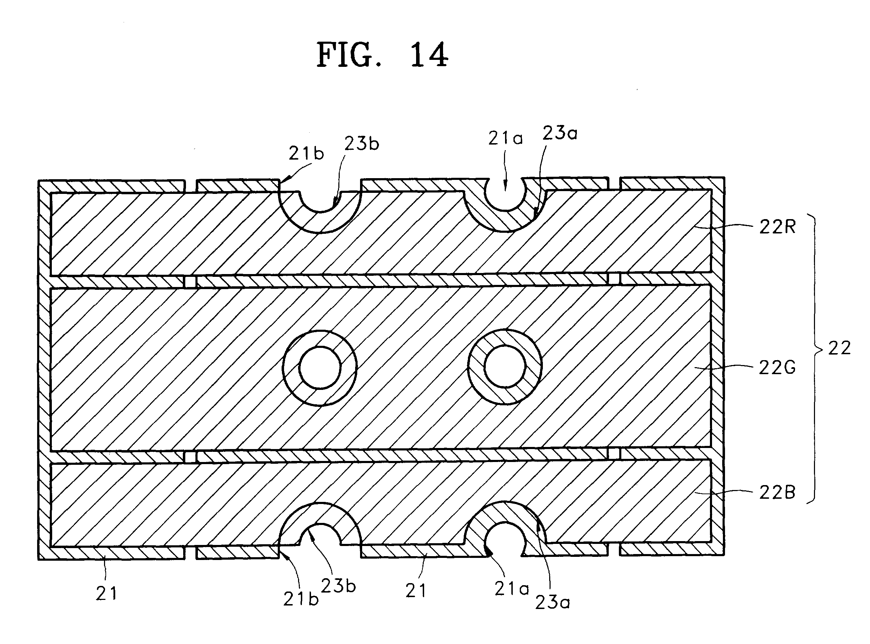

Referring to Figure 14, each first electrode 21 is arranged perpendicular to the second electrodes 22, and each second electrode 22 is comprised of a set of three electrode units 22R, 22G, and 22B for a colour display panel.

Large and small through holes 21a and 21b are formed through the first electrodes 21 and separated from each other by a predetermined distance. Through holes 23a and 23b corresponding to the through holes 21a and 21b are formed in the second electrodes 22R, 22G, and 22B. The small through holes are for electrical contact to corresponding contact fillings and the large through holes are to prevent contact with such contact fillings.

### EMBODIMENT 4

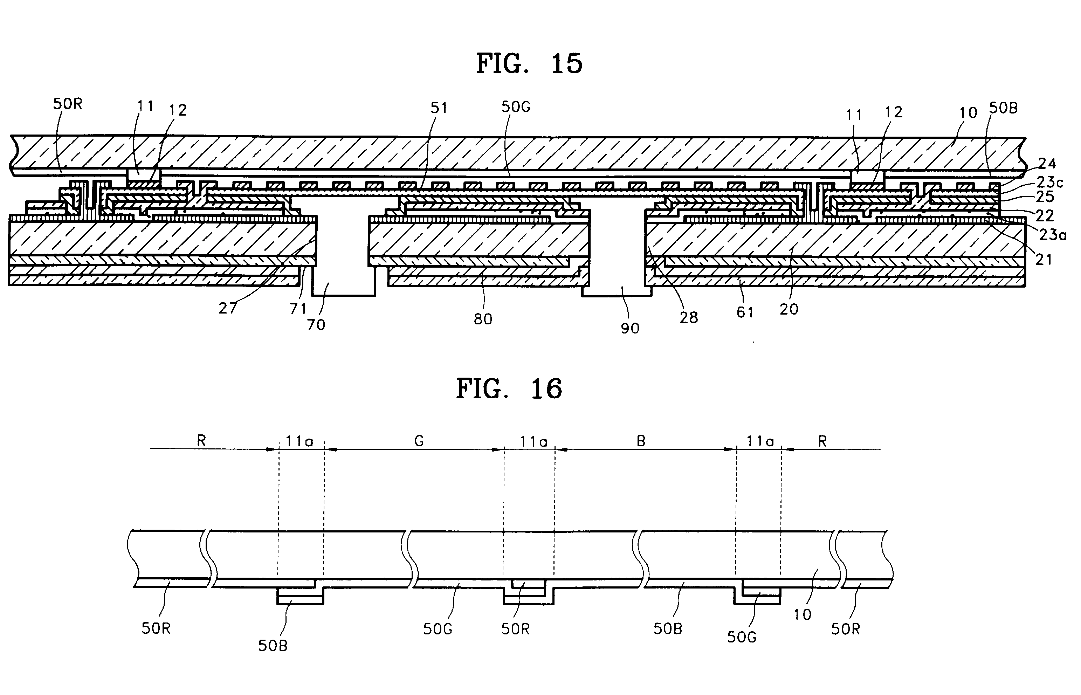

Means for realizing a colour picture, i.e. a colour filter layer or a colour reflective film are prepared on the rear plate 20 side in the case of the above-mentioned first through third embodiments. However, in this embodiment, the means for realizing the colour picture are arranged on the surface of the front plate 10. Referring to Figure 15, colour filters 50R, 50G, and 50B corresponding to respective pixel electrodes 24 are formed on the inner surface of the front plate 10 and spacers 11 of a predetermined height are formed between the colour filters 50. An insulating film 23C is formed on the ferromagnetic shield layer 25. The insulating film 23c replaces the colour reflective film 51 in the structure of Figure 12 described in the third embodiment. The insulating film 23c for electrical insulation between electrical elements in the lower portion thereof is an optional element which can be omitted when the ferromagnetic shield layer 25 and the electrical elements in the lower portion thereof are appropriately planned and designed so that the electrical elements in the lower portion thereof can be electrically insulated by the ferromagnetic shield layer 25 located in the lower portion thereof. The other elements have the same structural arrangement as that of the third embodiment.

### EMBODIMENT 5

In the fifth embodiment a spacer layer 11a formed on the front plate 10 is obtained during a process for forming a red colour filter 50R, a green colour filter 50G, and a blue colour filter 50B and the fabrication of the elements on the rear plate 20 side are identical to that of the fourth embodiment shown in Figure 15. Referring to Figure 16, the spacer layer 11a is obtained by overlapping the colour filters 50R, 50G, and 50B in the boundary regions of the respective areas R, G, and B. The pixel electrode 24 is preferably formed to have a dark colour such as black so that light which passes through an area other than the spacer layer obtained by the colour filters is not reflected from the electrode surface, in order to obtain a high contrast ratio.

Light reflectance is obtained by the highly reflective first and second electrodes, in case the insulating layer and the ferromagnetic shield layer are not reflective.

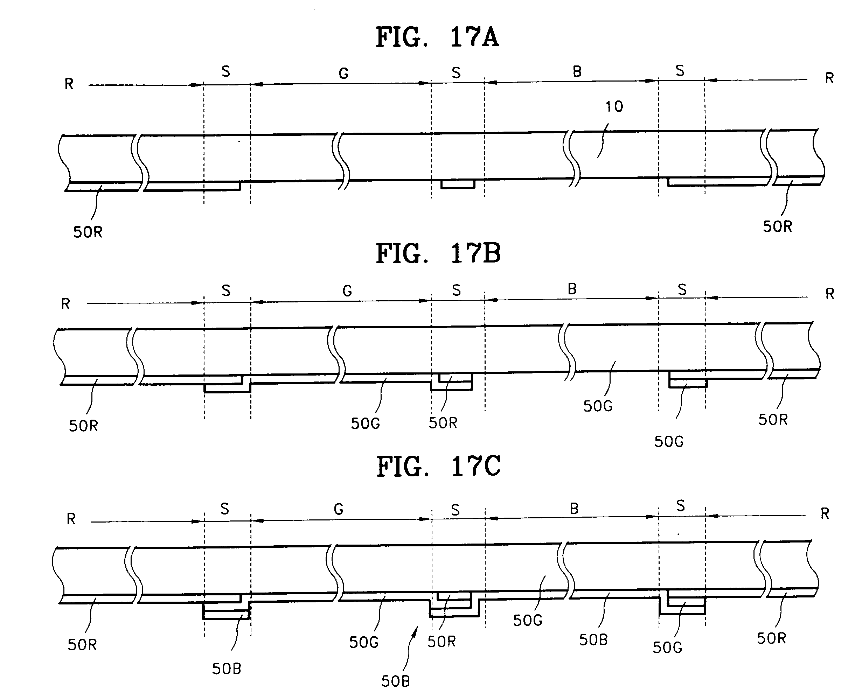

Figure 17A through 17C show a process for forming the colour filter layer and the spacer.

As shown in Figure 17A, the red filter layer 50R is formed in an area R and an area S in which the spacer layer is prepared.

As shown in Figure 17B, the green filter layer 50G is formed in an area G and the area S.

As shown in Figure 17C, the blue filter layer 50B is formed in an area B and the area S.

The above-mentioned colour filter layers can be patterned by an ordinary process for forming a thin film using, for instance, photolithography. The spacer layer can thus be formed without an additional process for forming a thin film.

### EMBODIMENT 6

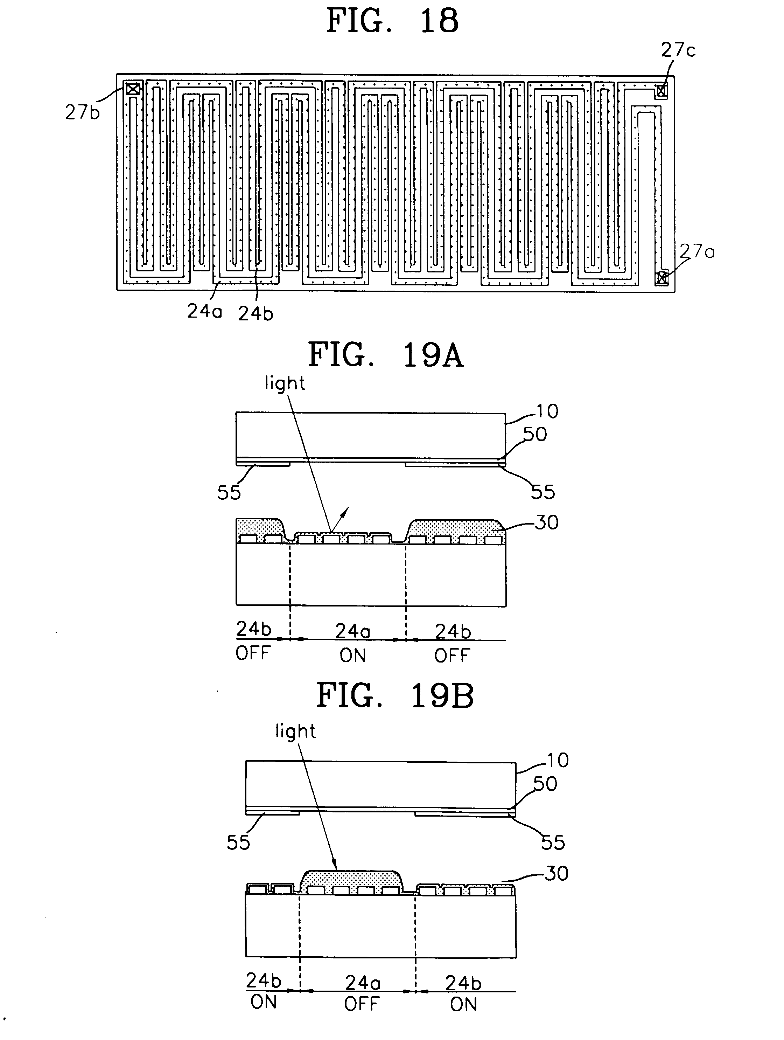

Figure 18 shows the sixth embodiment in which operation of the pixel can be improved by driving the magnetic fluid more efficiently using a magnetic field with an enhanced field gradient and by increasing the light reflectivity using the pixel electrodes as light reflectors. In Figure 18, reference numerals 27a, 27b, and 27c denote a first contact layer, a second contact layer, and a third contact layer, respectively. In this embodiment, a unit pixel includes two sub-pixel electrodes. Reference numeral 24a denotes a first sub-pixel electrode connected between the first contact layer 27a and the second contact layer 27b and reference numeral 24b denotes a second sub-pixel electrode connected between the second contact layer 27b and the third contact layer 27c. Three signal lines are required for driving the first sub-pixel electrode and the second sub-pixel electrode. A third electrode in line with one of the first electrode and the second electrode, for instance the first electrode, is required. In this case, the first sub-pixel electrode can be electrically connected to the first electrode and the second electrode and the second sub-pixel electrode 24b can be connected to the second electrode and the third electrode. Since such a structure can be easily designed using the above-mentioned embodiments and general technologies, detailed explanations thereof will be omitted.

In Figures 19a and 19b, reference numeral 55 formed under the colour filter 50 of the front plate 10 denotes a light blocking layer corresponding to the portion in the mass portion of the second sub-pixel electrodes 24b. Therefore, a plurality of light blocking layers 55 are formed in one unit pixel. In the case of the pixel electrode formed in Figure 18, six light blocking layers 55 are formed. In the unit pixel having the above structure, when current is applied to the first sub-pixel electrode 24a, a strong magnetic force is generated in the magnetic fluid residing on the first sub-pixel electrode 24a and the magnetic fluid is forced to move onto the second sub-pixel electrode 24b and, when current is applied to the second sub-pixel electrode 24b, a strong magnetic force is generated in the magnetic fluid on the second sub-pixel electrode 24b and the magnetic fluid is forced to move onto the first sub-pixel electrode 24a. Since the switching between on and off states of the pixel are performed by a magnetic field, the operational speed in the present embodiment can be faster than in the above-mentioned embodiments in which only the off-to-on switching is performed by the magnetic field. In the case where a metal is used as the pixel electrodes, the brightness of the pixel can be improved since light is reflected from the surface of the pixel electrode. Additionally, it may be easy to maintain a thick magnetic fluid on the electrodes since magnetic fluid can be supported by walls as will be described later.

As shown in Figure 19A, in the case of applying current to the first sub-pixel electrode 24a, the magnetic fluid is pushed out to the second sub-pixel electrode 24b to which current is not applied since a strong magnetic field with a large gradient of field strength is formed around the first sub-pixel electrode 24a and pressure acts in the magnetic fluid 30 in the vertical direction toward the first sub-pixel electrode 24a. Therefore, the thickness of the magnetic fluid on the first sub-pixel electrode 24a area becomes thinner and the thickness of the magnetic fluid 30 on the second sub-pixel electrode 25b becomes thicker. When a strong magnetic field is formed around the second sub-pixel electrode 24b by the application of current to the second sub-pixel electrode as shown in Figure 19B, the magnetic fluid is pushed out to the first sub-pixel electrode 24a to which current is not applied since pressure in the magnetic fluid on the second sub-pixel area acts in the vertical direction toward the second sub-pixel electrode 24b. Therefore, the thickness of the magnetic fluid on the second sub-pixel electrode 24b becomes thinner and the thickness of the magnetic fluid 30 positioned on the first sub-pixel electrode 24a becomes thicker.

According to the above-mentioned two states, the reflectivity of the light incident on the pixel varies as shown in Figures 19A and 19B. In the case where the magnetic fluid 30 residing on the first sub-pixel electrode 24 becomes thinner, the corresponding pixel becomes brighter since more of the light is reflected by the first sub-pixel electrode. In the case where the magnetic fluid 30 placed on the first sub-pixel electrode 24a is formed to be thick, the corresponding pixel remains dark since the reflection of light in the first sub-pixel electrode 24a is reduced. At this time, the reflectivity from the second sub-pixel electrode 24b of the off area is high, but the corresponding pixel remains dark regardless of the operation of the pixel electrode since light does not reach the second sub-pixel electrode 24b due to the light blocking layers 55.

### EMBODIMENT 7

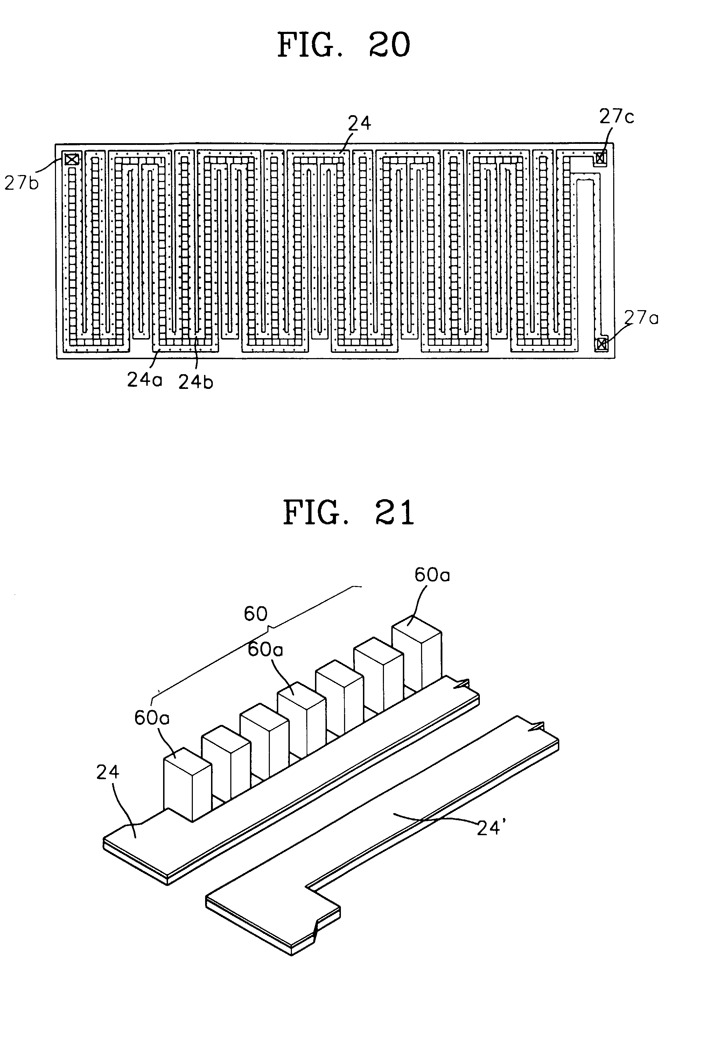

In the embodiment shown in Figures 20 to 22, walls 60 for supporting the magnetic fluid film by capillarity are formed with a predetermined height along the gap area between the first sub-pixel electrode 24a and the second sub-pixel electrode 24b so that a thicker film of magnetic fluid can be maintained on the surfaces of the sub-pixel electrodes in the above-mentioned embodiment 6. The wall 60 consists of an array of dielectric columns 60a spaced apart by a predetermined distance along the gap area as shown in Figure 21. The wall 60 can also be formed in a continuous pattern. The wall 60 formed of an array of columns as shown in Figure 21 is preferable in order to reduce the resistance against the flow of the magnetic fluid 30 because the wall locates in the middle of the moving path of the magnetic fluid 30. The flowing of the magnetic fluid 30 from one area to the other is hindered by the presence of the wall.

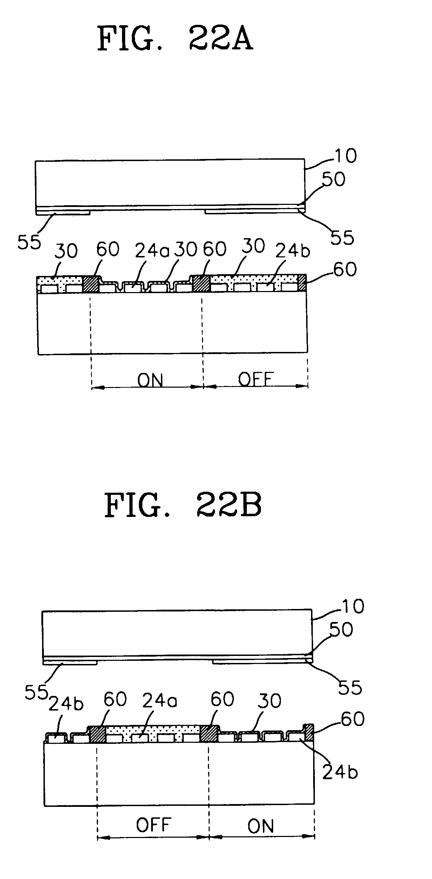

Referring to Figure 22A, current is applied to the first sub-pixel electrode 24a and the magnetic fluid 30 in the mass region of the first sub-pixel electrodes 24a moves into the mass region of the second sub-pixel electrodes 24b by the operation described in the above-mentioned embodiment 6 over the wall 60 or through the spaces between the columns.

On the other hand, when current is applied to the second sub-pixel electrode 24b as shown in Figure 22B, the magnetic fluid is moved from the mass region of the second sub-pixel electrodes 24b to the mass region of the first sub-pixel electrodes 24a by strong pressure as mentioned in the above operation over or through the wall.

### EMBODIMENT 8

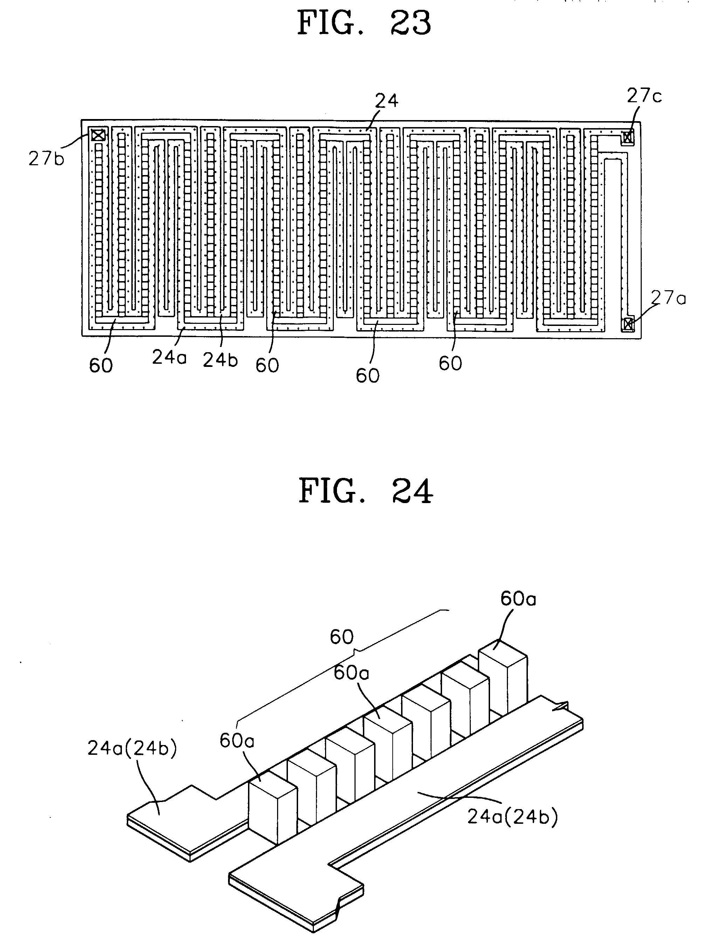

In the eighth embodiment shown in Figure 23, the location of the wall in the embodiment 7 is changed. The wall 60 is formed outside the moving path, i.e. in the middle of the mass region of the respective electrodes. That is, the walls 60 are respectively formed in the middle of the mass regions of the first sub-pixel electrodes 24a and the second sub-pixel electrodes 24a as shown in Figure 24.

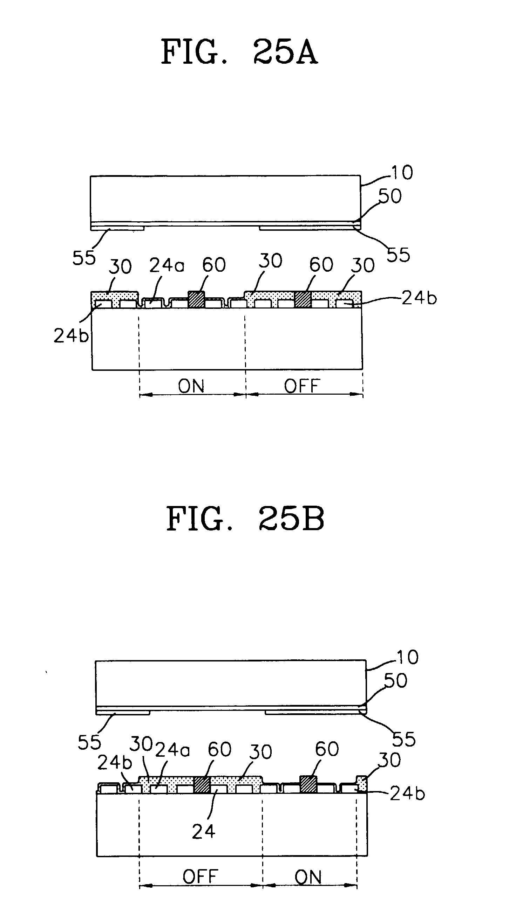

In this structure, the wall 60 provides adsorbing force to keep the magnetic fluid 30 which moves from the mass region of the adjacent pixel electrode to the mass region of the corresponding pixel electrode. The wall 60 holds the magnetic fluid 30 in the area (OFF) of the second sub-pixel electrode 24b, to which current is not applied, by the adsorbing force of the wall surfaces as shown in Figure 25A. The area to which current is applied releases some of the magnetic fluid 30 since the pressure due to the strong magnetic field in the corresponding pixel electrode is greater than the adsorbing force of the wall 60 therein. Figure 25B shows a state in which current is applied to the second sub-pixel electrodes 24b and the magnetic fluid 30 stays in the area of the first sub-pixel electrodes 24a due to the above mentioned operation and is held by the wall 60 in the first sub-pixel electrodes 24a.

### EMBODIMENT 9

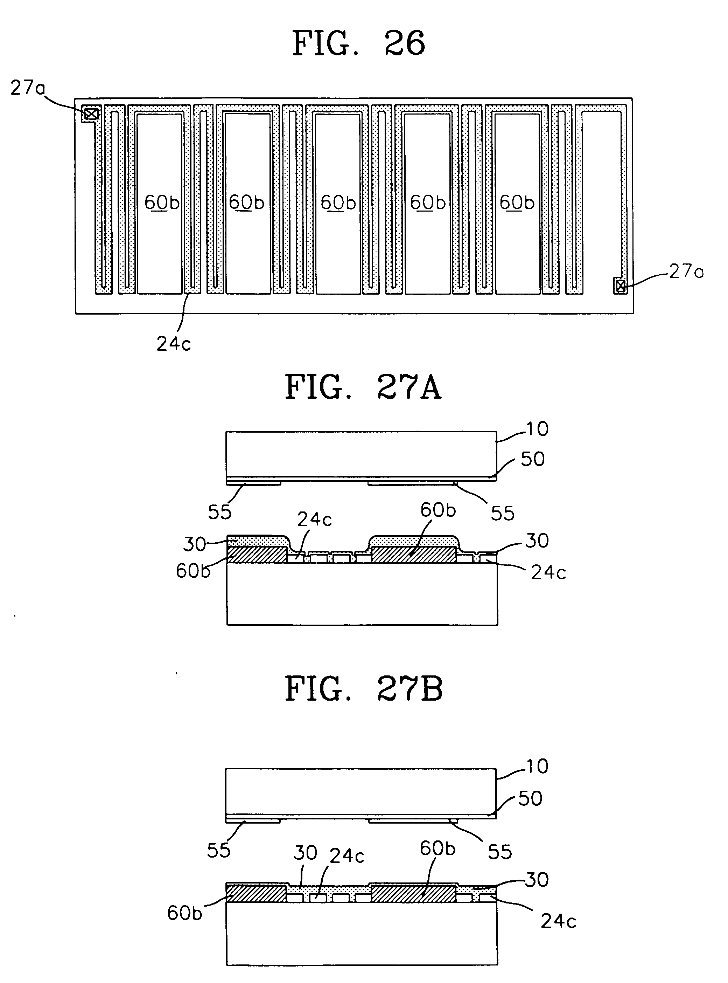

Figure 26 shows the ninth embodiment in which the second sub-pixel electrodes 24b are removed from the structure of the above embodiments 6, 7, and 8 and walls 60b having a predetermined area and height are formed in the empty spaces.

Referring to Figure 26, pixel electrodes 24c connected to a first contact layer 27a and a second contact layer 27b form uniformly spaced mass regions and the walls 60b are formed between the mass regions.

As shown in Figures 27A and 27B, the walls 60b having predetermined width and height are formed in the areas corresponding to the light blocking layer 55 on the front surface of the front plate 10. Figure 27A shows a state in which current is applied to the pixel electrodes 24c, and the magnetic fluid 30, which is initially on the surface of the pixel electrodes, is pushed up to cover the surface of the walls 60b by the pressure generated by the magnetic field. Figure 27B shows a state in which the current supply to the pixel electrodes 24c is terminated and the magnetic fluid is restored back to the pixel electrode 24c by surface tension.

### EMBODIMENT 10

In this present embodiment, in which the structure of the fifth embodiment is improved, the spacer layer 11a formed on the front plate 10 and particularly the light blocking layer 55a are obtained during the processes for forming the red colour filter 50R, the green colour filter 50G, and the blue colour filter 50B. The light blocking layer 55a, which is particularly suitably of the reflective type, can be formed during the manufacturing process over the areas corresponding to the body of the pixel electrode that is, in the portion of area excluding the light transmission area over the pixel electrode.

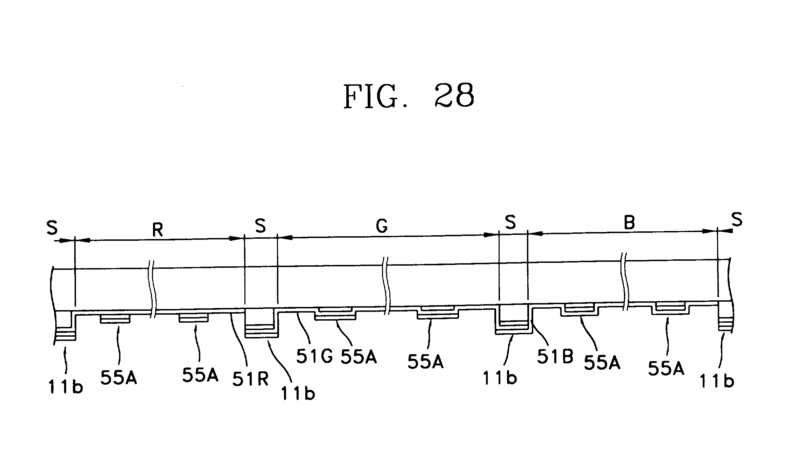

Referring to Figure 28, a spacer 11b formed between pixels and the light blocking layer 55a formed in the middle of the pixels are formed in the portion in which light transmission is to be blocked by overlapping the colour filters 51R, 51G, and 51B.

Figures 29A through 29D show the process steps for forming the colour filter layers, the spacer, and the light blocking layer.

As shown in Figure 29A, a base layer 111 for the spacer 11b is formed on the inner surface of a substrate 10. The base layer 111 is formed in the boundary area between the pixels.

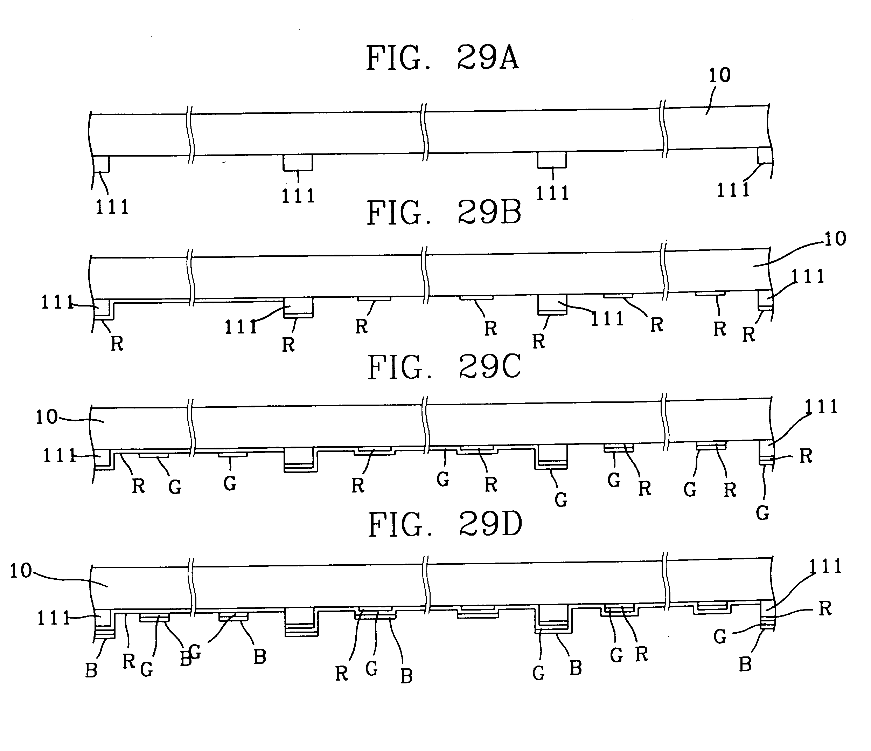

As shown in Figure 29B, the red filter layer 50R is formed on the area R and areas in which a light blocking layer is required in the areas S, G, and B and on the spacer.

As shown in Figure 29C, the green filter layer 50G is formed on the area G and areas in which a light blocking layer is required in the areas S, R, and G and on the spacer.

Finally, the colour filter layers, the spacer, and the light blocking layers are completed as shown in Figure 28 by forming the blue filter layer 50B on the area B and areas in which a light blocking layer is required in the areas S, R, and G and on the spacer as shown in Figure 29D.

This process can be applied to any embodiment in which a light blocking layer is required in the pixel area and/or spacer.

The above colour filters can be formed by generally used processes for forming a patterned thin film using, for instance, photolithography. A spacer layer and a light blocking layer can be formed without any additional patterned thin film forming processes.

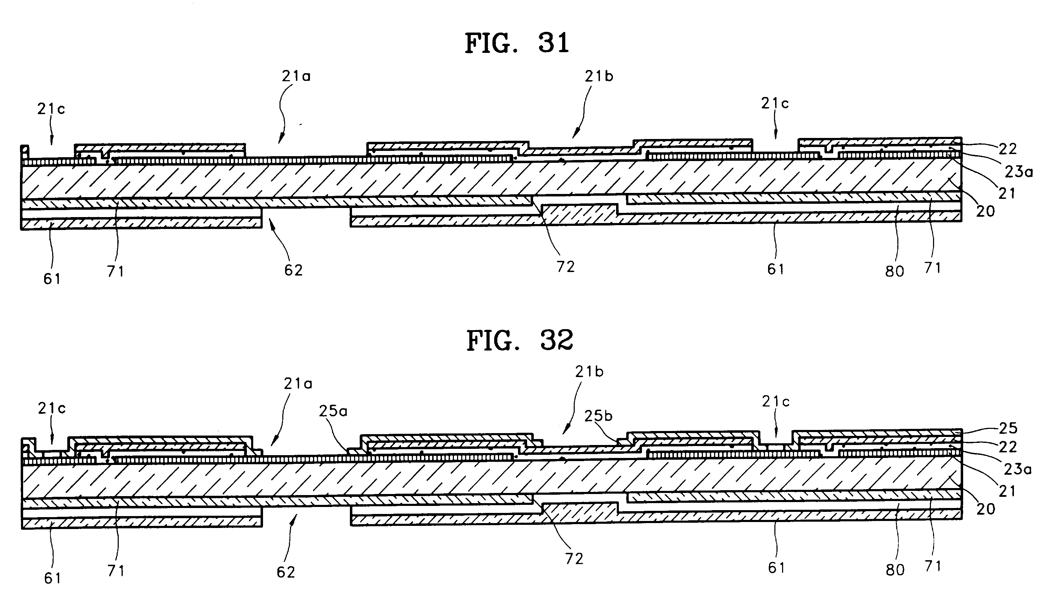

Hereinafter, a typical process for fabricating a reflective type display panel according to an example of the present invention is described with reference to Figures 31 through 42.

Figure 31 shows a state in which base layers are formed on front and rear surfaces by general processes including photolithography. Namely, the first electrode 21, the insulating layer 23a, and the second electrode 22 are formed sequentially to have predetermined patterns on the front surface of the real plate 20. The first signal line 71 and the second signal line 61 are formed on the rear surface of the real plate 20, with an insulating layer 80 incorporated therebetween and corresponding in pattern to the first and second electrodes 21 and 22.

A through hole 72 is formed in the first signal line 71 and a through hole 62 keeping a predetermined gap from the through hole 72 is formed in the second signal line 61 and the insulating layer 80. A through hole 21b corresponding to the through hole 72 of the first signal line 71 is formed in the first electrode 21. A through hole 21a corresponding to the through hole 62 of the second signal line 61 and a through hole 21c for an electrical contact of the pixel electrode keeping a predetermined distance from the through holes 62 and 21a are formed in the second electrode 22 and the insulating layer 23a.

Referring to Figure 32, an insulating ferromagnetic shield layer 25 is formed on the second electrode 22 on the resultant structure shown in Figure 31. A through hole 25a concentric with the through hole 21b of the second electrode 22 and having a smaller diameter than that of the through hole 21b and a through hole 25b concentric with the through hole 21a of the first electrode and having a smaller diameter than that of the through hole 21a are formed in the ferromagnetic shield layer 25.

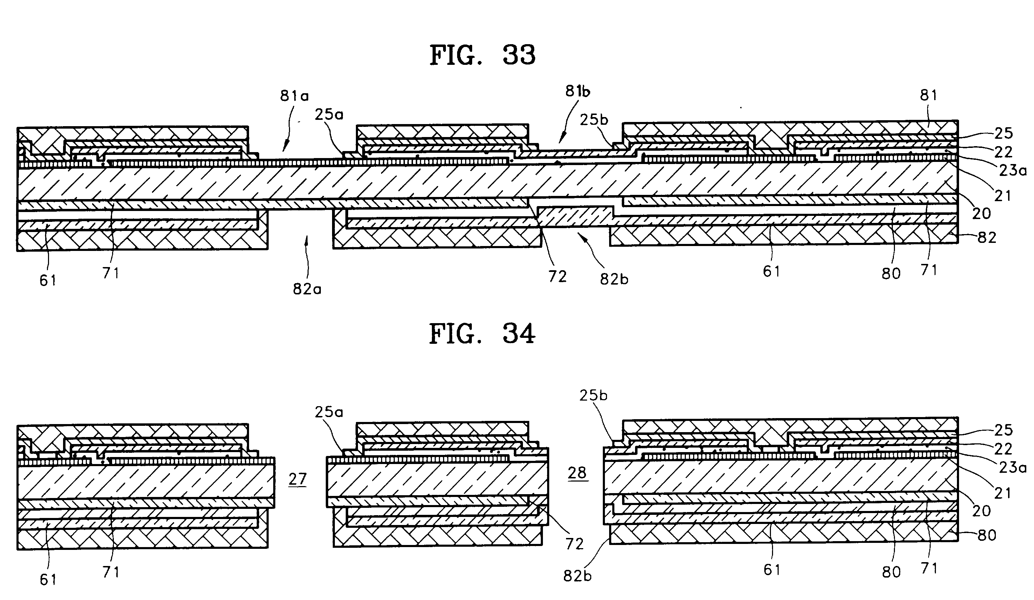

Referring to Figure 33, masking layers 81 and 82 for plating are formed on both surfaces of the above structure. At this time, through holes 81a and 81b concentric with the through holes 25a and 25b of the ferromagnetic shield layer 25 and having smaller diameters than those of the through holes 25a and 25b are formed in the first masking layer 81 of the upper portion. Also, through holes 82a and 82b corresponding to the through holes 23a and 21b of the first electrode 21 and the second electrode 22 are formed in the second masking layer 82 of the lower portion. The through hole 82a has a smaller diameter than that of the through hole 62 of the second signal line 61 and the through hole 82b has a smaller diameter than that of the through hole 72 of the first signal line 71.

Referring to Figure 34, through holes 27 and 28 are formed in the substrate. At this time, the through holes 27 and 28 are respectively positioned in the center of the through holes 81a, 82a and 81b, 82b in the first and second masking layers 81 and 82.

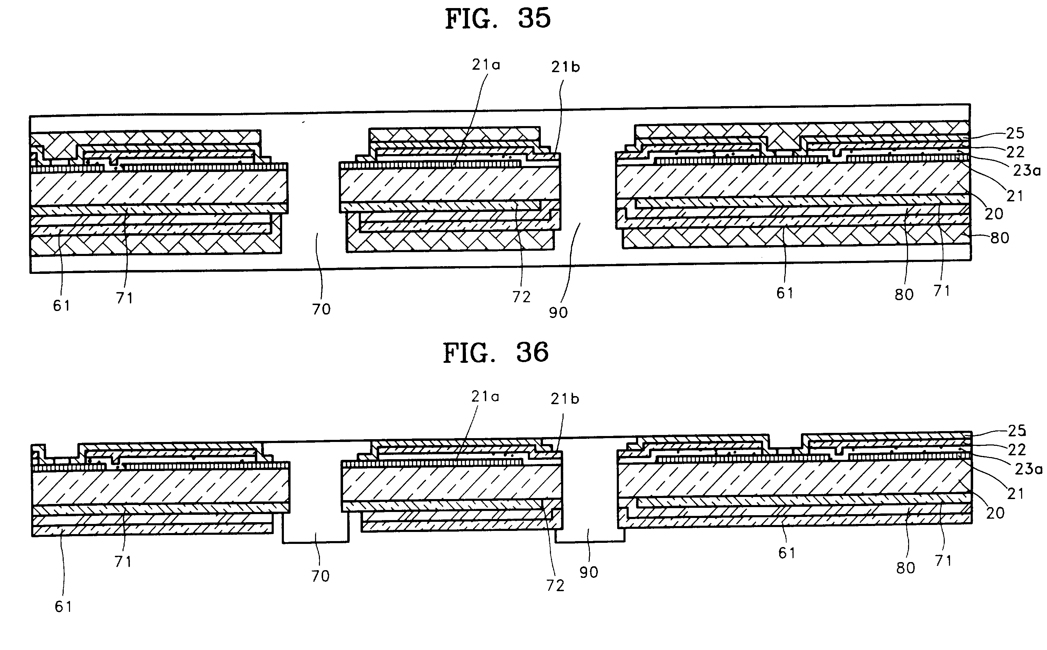

As shown in Figure 35, contact layers 70 and 90 are formed by filling the through holes 27 and 28 and the first electrode 21 and the second electrode 22 are electrically connected thereby to the first signal line 71 and the second signal line 61, respectively.

As shown in Figure 36, the contact layers 70 and 90 formed by plating are electrically separated by removing the first and second masking layers by a lift-off method and the degree of smoothness of the surface is heightened by polishing the entire exposed surface by a polishing method, if necessary.

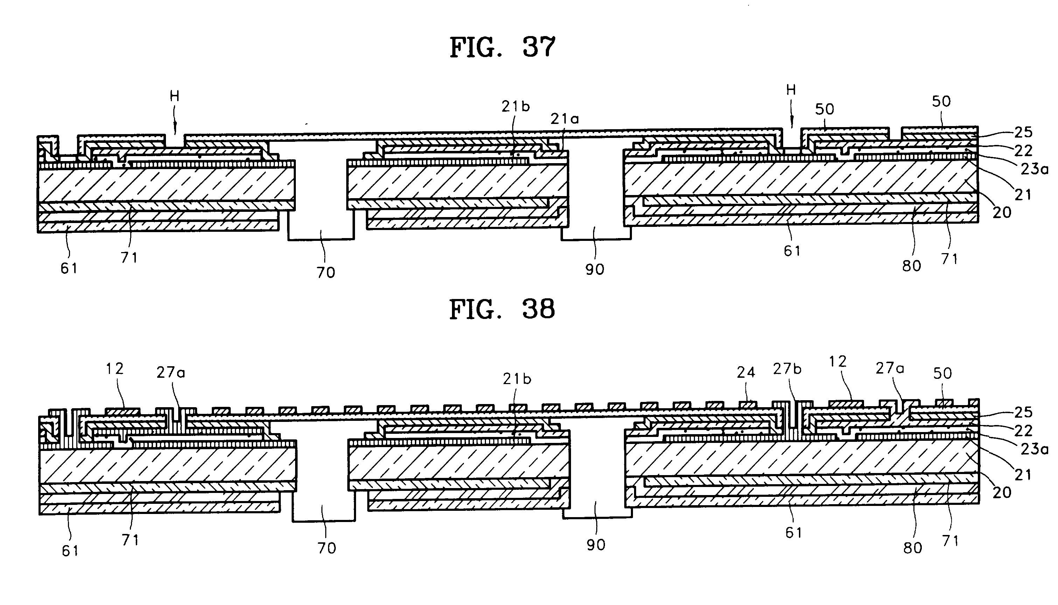

As shown in Figure 37, a colour reflective film 50 is formed on the ferromagnetic shield layer 25. At this time, through holes for electrical contacts between the subsequently formed pixel electrode 24, the first electrode 21, and the second electrode 22 are formed in the colour reflective film 50 and the ferromagnetic layer 25.

As shown in Figure 38, the pixel electrode 24 and a first spacer 12 between the pixel electrodes are formed on the colour reflective film 50. At this time, the pixel electrode 24 is electrically connected to the first and second electrodes in the lower portion thereof by the contact layers 27a and 27b.

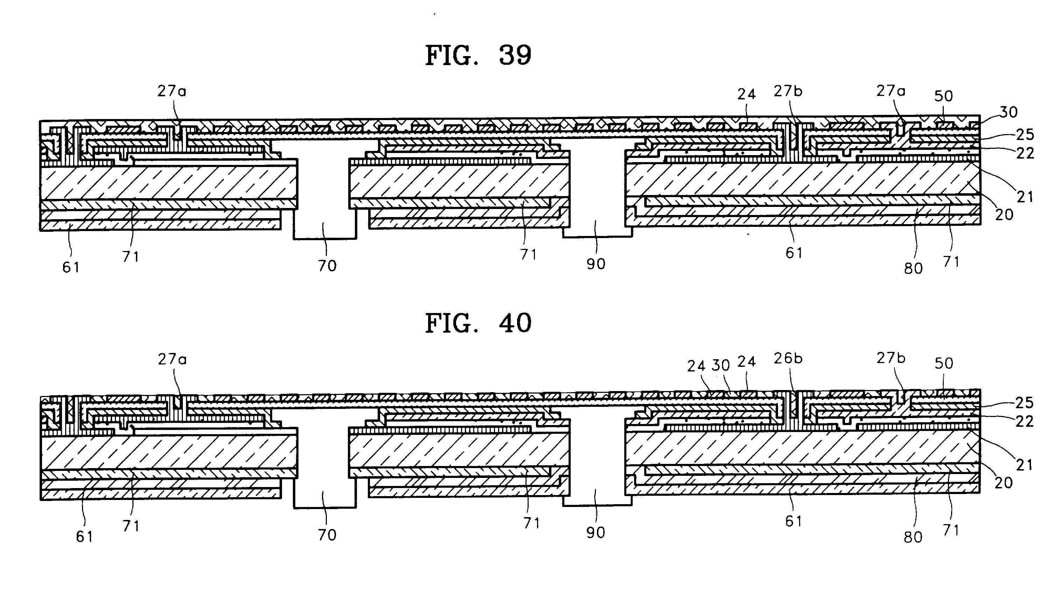

As shown in Figure 39, the magnetic fluid 30 is formed to a predetermined thickness on the pixel electrode 24 by, for instance, a spin coating method and the magnetic fluid 30 is then frozen.

As shown in Figure 40, the pixel electrode 24 is exposed by polishing the surface of the frozen magnetic fluid 30 to a predetermined depth.

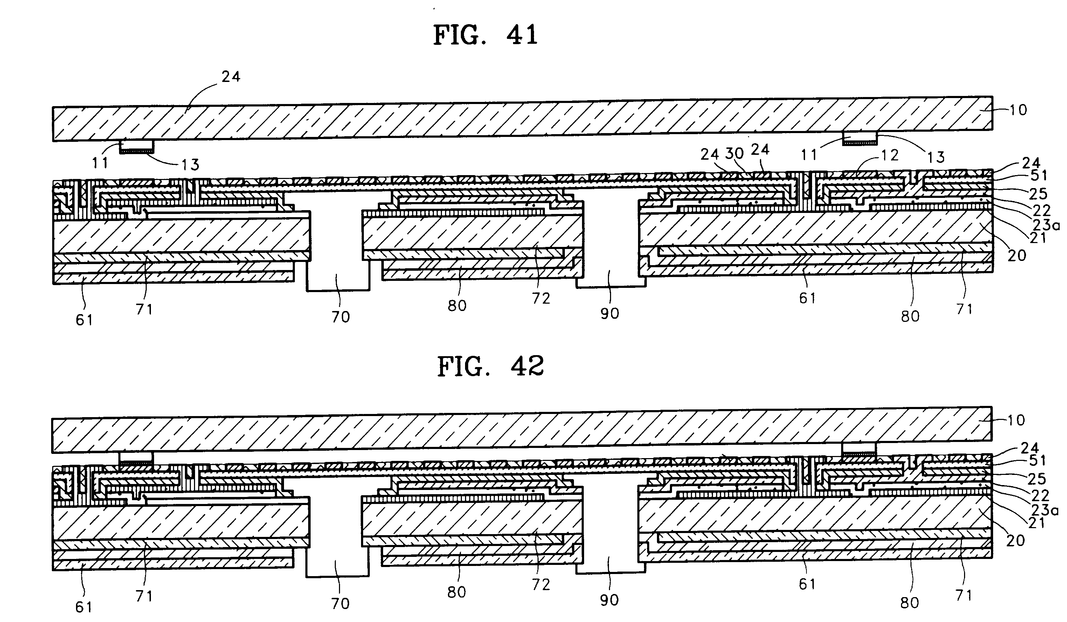

As shown in Figures 41 and 42, a completed display panel shown in Figure 42 is obtained by attaching the front plate 10 on which are formed second spacers 11 corresponding to the first spacers 12 formed to a predetermined height on the rear plate 20. At this time, the adhesion between the first spacer 12 and the second spacer 11 is provided by compression or adhesives.

In the above-described display panels the manufacturing process can be significantly simplified because the making of the panel comprises basically fixing the front plate to the rear plate, keeping a suitable distance between them so that the magnetic fluid does not touch the front plate after coating the magnetic fluid on the inner surface of the rear plate, and does not require complex process steps such as injecting liquid crystal, as required in liquid crystal display devices. Air can exist in the space in which the magnetic fluid exists and thus a simple sealing with narrow width is required to prevent the leakage or evaporation of magnetic fluid, in contrast to an extremely complicated sealing process required in the case of liquid crystal displays at the edge of the display panel.

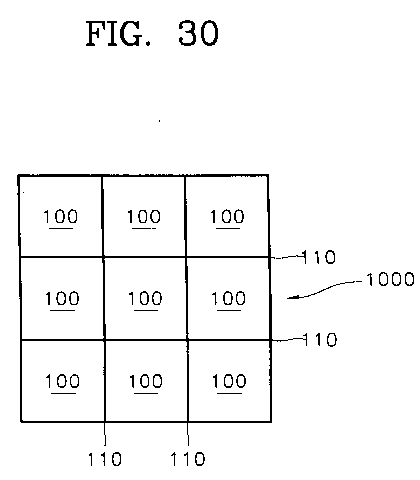

Additionally, in the above-mentioned reflective type display panel, since electrical signals to the first electrode 21 and the second electrode 22 can be applied from the backside of the rear plate through the through holes 70 and 60, edge terminals required for the application of signal to the pixel electrodes can be dispensed with. Thus, it is possible to use the entire panel area as an active screen and to minimize the margin of the edge. Therefore, as shown in Figure 30, when a large display device 1000 is constructed by integrating a plurality of display panels 100, the display panels can be integrated to a degree in which the width of the boundary 110 between the unit display panels 100 is minimized and not detectable in use, namely, to a degree in which a distance between adjacent pixels between the unit display panels is comparable with that between pixels in the same panel.

Also, a plurality of through holes for connecting the signal lines to the first and second electrodes can be prepared such that voltage drop in each electrode can be minimized. Namely, a signal is applied to one end or both ends of each electrode in conventional technology, but a signal is applied to a plurality of middle portions of each electrode in preferred embodiments of the present invention. Therefore, it is possible to remarkably reduce the voltage drop in an electrode of a high resistance.

Thus, preferred embodiments of the present invention may provide magnetic fluid display panels which are highly responsive and easy to manufacture.

The present invention is not restricted to the above examples of embodiments, and many variations are possible within the scope and spirit of the present invention by anyone skilled in the art.

In this specification, terms of orientation are used conveniently to denote the usual orientation of items in normal use and/or as shown in the accompanying drawings. However, such items could be disposed in other orientations, and in the context of this specification, terms of orientation, such as "top", "bottom", "front", "rear", "below", etc. are to be construed accordingly, to include such alternative orientations.

In this specification, the verb "comprise" has its normal dictionary meaning, to denote non-exclusive inclusion. That is, use of the word "comprise" (or any of its derivatives) to include one feature or more, does not exclude the possibility of also including further features.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A magnetic fluid display panel, comprising:
a front plate (10) and a rear plate (20), separated from each other by a predetermined distance;
a plurality of first electrodes (21) arranged in strips on an inner surface of said rear plate (20) in a first direction;
a plurality of second electrodes (22) arranged in strips in a direction which crosses said first direction and electrically insulated from said first electrodes (21);
pixel electrodes (24) of a predetermined pattern formed between crossing points of said first and second electrodes (21,22), having light transmission areas (31) through which light can pass, each pixel electrode (24) being electrically connected to adjacent first and second electrodes (21,22) for forming a magnetic field around the pixel electrode (24); and
magnetic fluid (30) on the inner surface of said rear plate (20) in the vicinity of said pixel electrodes (24).

2. A magnetic fluid display panel as claimed in claim 1, wherein said first and second electrodes (21,22) extend rectilinearly at right angles to one another, to form a rectangular matrix.

3. A magnetic fluid display panel as claimed in claim 1 or 2, wherein colour filters (50) are formed between said pixel electrodes (24) and said rear plate (20).

4. A magnetic fluid display panel as claimed in claim 1, 2 or 3, wherein ferromagnetic shield layers (25) are formed between said pixel electrodes (24) and said rear plate (20).

5. A magnetic fluid display panel as claimed in any of the preceding claims, wherein said predetermined pattern of said pixel electrodes (24) is a serpentine pattern such that each of said pixel electrodes (24) zigzags back and forth.

6. A magnetic fluid display panel as claimed in any of the preceding claims, wherein colour reflective films (51) are formed between said pixel electrodes (24) and said rear plate (20).

7. A magnetic fluid display panel as claimed in any of the preceding claims, wherein colour filters (50R,50G,50B) corresponding to said pixel electrodes (24) are formed in said front plate.

8. A magnetic fluid display panel as claimed in claim 7, wherein said colour filters (50R,50G,50B) comprise unit colour filters of a plurality of colours and a spacer (11a) formed by overlapping said unit colour filters (50R,50G,50B) is formed in a predetermined portion of the boundary area of said unit colour filters.

9. A magnetic fluid display panel as claimed in any of the preceding claims, wherein a plurality of signal lines (61,71) for transmitting signals to said first and second electrodes (21,22) are arranged on an outer surface of said rear plate (20) and through holes (27,28), in which contacts (70,90) for electrically connecting said first and second electrodes (21,22) with said signal lines (61,71) are formed, are formed in said rear plate (20).

10. A magnetic fluid display panel as claimed in any of the preceding claims, wherein a spacer layer (11,12) for maintaining said predetermined distance is interposed between said front plate (10) and said rear plate (20).

11. A magnetic fluid display panel as claimed in claim 10, wherein said spacer layer (11,12) comprises a first spacer (12) formed on the inner surface of said rear plate (20) and a second spacer (11) formed on an inner surface of said front plate (10).

12. A magnetic fluid display panel as claimed in claim 11, wherein said first spacer (12) is manufactured during a process step in which said pixel electrode (24) is manufactured.

13. A magnetic fluid display panel as claimed in any of the preceding claims, wherein said magnetic fluid (30) is located only on the inner surface of said rear plate (20).

14. A magnetic fluid display panel as claimed in any of the preceding claims, wherein each of said pixel electrodes (24) is provided with walls (60) to assist retention of said magnetic fluid (30).

15. A magnetic fluid display panel as claimed in claims 5 and 14 wherein, for each of said pixel electrodes (24), said walls (60) having a predetermined width and height are formed in areas defined between consecutive portions of the pixel electrode (24).

16. A magnetic fluid display panel as claimed in claim 14 or 15, wherein light blocking layers corresponding to said walls (60) are formed on an inner surface of said front plate (10).

17. A magnetic fluid display panel as claimed in any of the preceding claims, wherein a light blocking layer (55) is formed in areas other than light transmission areas (31) of said pixel electrodes (24).

18. A magnetic fluid display panel as claimed in claims 7 and 17, wherein said colour filters (50R,50G,50B) comprise unit colour filters of a plurality of colours and said light blocking layer (55) is formed by overlapping said unit colour filters (50R,50G,50B).

19. A magnetic fluid display panel as claimed in any of the preceding claims, wherein:
a plurality of third electrodes are formed on said rear plate (20) parallel to said first or said second electrodes (21,22); and
each said pixel electrode (24) comprises a first sub-pixel electrode (24a) electrically connected to said first and second electrodes (21,22) and a second sub-pixel electrode (24b) electrically connected to said second electrode (22) and said third electrode.

20. A magnetic fluid display panel as claimed in claim 19 wherein, for each said pixel electrode (24), said first and second sub-pixel electrodes (24a,24b) follow substantially the same path alongside one another.

21. A magnetic fluid display panel as claimed in claim 14 together with claim 19 or 20, wherein said walls (60) are formed along boundaries of said first sub-pixel electrode (24a) and second sub-pixel electrode (24b) of each pixel electrode (24).

22. A magnetic fluid display panel as claimed in claim 14 together with claim 19 or 20, wherein said walls (60) are formed in areas defined by said first sub-pixel electrodes (24a) and in areas defined by said second sub-pixel electrodes (24b).

23. A magnetic fluid display panel as claimed in claim 14 or any of claims 15 to 22 as appendant to claim 14, wherein each said wall (60) comprises a group of dielectric columns having predetermined width, height, and gap distance.

24. A method of manufacturing a magnetic fluid display panel as claimed in any of the preceding claims, comprising the steps of:
forming said plurality of first electrodes (21) in strips on the inner surface of the rear plate (22) in a first direction;
forming a first insulating film (23a) on said first electrodes (21);
forming said plurality of second electrodes (22) on said first insulating film (23a);
forming a second insulating film (23b) on said second electrodes (22);
forming said pixel electrodes (24) on said second insulating film (23b), each having a light transmission area (31) in the range of a magnetic field generated when the pixel electrode (24) is energised via said first and second electrodes (21,22);
coating said magnetic fluid (30) to a predetermined thickness on said pixel electrodes (24) and the surface of said second insulating layer (23b) exposed to said light transmission area (31);
freezing said magnetic fluid (30);
exposing the surface of said pixel electrode (24) by polishing said magnetic fluid (30) to a predetermined thickness; and
fixing said front plate (10) to said rear plate (20), to maintain said predetermined distance therebetween.

25. A method as claimed in claim 24, comprising the further steps of:
forming a plurality of signal lines (61,71) for transmitting a display signal on an outer surface of the rear plate (20); and
forming through holes (27,28) in the rear plate (20) for contacts (70,90) to electrically connect said first and second electrodes (21,22) with said signal lines (61,71).
